# EUROPÄISCHE PATENTSCHRIFT

(11) **EP 1 216 170 B1**
(45) Veröffentlichungstag und Bekanntmachung des Hinweises auf die Patenterteilung: **16.11.2005**
(21) Anmeldenummer: 00962319.0
(22) Anmeldetag: 16.08.2000
(51) Int. Cl.: B60R 21/34, B62D 25/10

(54) **SYSTEM ZUM ANHEBEN UND ABSENKEN EINER MOTORHAUBE EINES KRAFTFAHRZEUGES**
SYSTEM FOR RAISING AND LOWERING A BONNET OF A MOTOR VEHICLE
SYSTEME POUR FAIRE MONTER ET DESCENDRE UN CAPOT DE VEHICULE AUTOMOBILE

(30) Priorität: 28.09.1999 DE 19946408
(43) Veröffentlichungstag der Anmeldung: 26.06.2002
(73) Patentinhaber: Siemens Restraint Systems GmbH, 63755 Alzenau (DE)
(72) Erfinder: NOUWYNCK, Stéphane, 63843 Niedernberg (DE)
(74) Vertreter: Fuchs Mehler Weiss & Fritzsche
(86) Internationale Anmeldenummer: PCT/EP2000/007955
(87) Internationale Veröffentlichungsnummer: WO 2001/023225

(56) Entgegenhaltungen:
- DE-A- 4 320 226
- DE-A- 19 721 565
- PATENT ABSTRACTS OF JAPAN vol. 1998, no. 04, 31. März 1998 (1998-03-31) & JP 09 315266 A (MITSUBISHI MOTORS CORP), 9. Dezember 1997 (1997-12-09)

## Beschreibung

Die Erfindung betrifft ein System zum Anheben und Absenken einer Motorhaube eines Kraftfahrzeuges. Derartige Systeme sind im praktischen Einsatz und dienen als Schutzsystem in erster Linie für Fußgänger und Radfahrer. Ein solches System ist aus der gatlungsgemäßen DE 197 21 565 A bekannt.

Kommt es zu einem Zusammenprall zwischen Fahrzeug und Fußgänger so trifft der Fußgänger bei Geschwindigkeiten des Fahrzeugs zwischen 20 und 70 km/h regelmäßig mit dem Kopf auf die Motorhaube auf, was meist unmittelbar tödliche Kopfverletzungen zur Folge hat. Um dieses Problem zu lösen wurde daher versucht, die Motorhaube zunächst aus einem weicheren Material herzustellen, also aus beispielsweise einem dünneren Blech. Dies birgt allerdings die Gefahr in sich, daß der Kopf nun aufgrund des federnden weicheren Materials nicht nur auf die Motorhaube aufschlägt, sondern bis zum Motorblock des Fahrzeugs durchschlägt, was noch gravierendere Folgen hat als die Kollision mit einer Motorhaube aus härterem Material.

Das eingangs erwähnte System setzt daher ein Konzept um, bei dem die Motorhaube angehoben wird, damit der Abstand zwischen Motorhaube und Motorblock vergrößert wird, sodaß die Gefahr für einen Durchschlag des Kopfes bis zum Motorblock verringert wird.

Hierzu finden nicht-reversible Systeme Einsatz wie z.B. pyrotechnische Treibsätze, die als Aktuatoren für das Anheben der Motorhaube eingesetzt wurden. Ein Crashsensor detektiert bei bekannten Systemen den Aufprall und generiert ein Auslösesignal für den Aktuator.

Das System hat zwei gravierende Nachteile:

Einerseits ist es erst aktiviert, wenn der Aufprall bereits stattgefunden hat, so daß wertvolle Zeit für die Entfaltung vorbeugender Schutzwirkung verloren geht. Zum anderen entstehen dem Halter des Fahrzeugs in jedem Falle Wiederaktivierungskosten hinsichtlich der Aktuatoren, selbst wenn das System irrtümlich oder aufgrund einer Fehlreaktion ausgelöst worden sein sollte. Dann muß das Fahrzeug nämlich in einer Werkstatt beispielsweise mit neuen pyrotechnischen Treibsätzen bestückt werden.

Die Aufgabe der vorliegenden Erfindung ist es daher, ein System anzugeben, welches einerseits reversibel ist und andererseits eine vergleichbare oder sogar bessere Schutzwirkung für Fußgänger und Radfahrer entfaltet als bekannte Motorhauben-Anhebesysteme.

Gelöst wird diese Aufgabe durch ein System mit den Merkmalen, die im unabhängigen Anspruch 1 angegeben sind. Weitere vorteilhafte Ausführungsformen sind in den Unteransprüchen angegeben.

Demnach weist das erfindungsgemäße System wenigstens einen Pre-Crash-sensor, mittels dessen eine unmittelbar bevorstehende Kollision des Fahrzeuges mit einem Hindernis sensierbar und ein entsprechendes Signal generierbar ist, sowie wenigstens einen Aktuator auf, der die Motorhaube auf Ansteuerung durch das eine unmittelbar bevorstehende Kollision anzeigende Signal vom Pre-Crashsensor in eine angehobene Position verfährt, derart, daß der Abstand zwischen der Motorhaube und dem Motorblock des Fahrzeugs um einen vorgebbaren Sicherheitsabstand erhöht wird, und der auf ein Ausbleiben einer Kollision auf Ansteuerung durch ein weiteres Signal die Motorhaube wieder in die Ausgangsposition absenkt.

Reversibel ist das System dadurch, daß als Aktuatoren hydraulische, pneumatische oder rein elektromotorische Aktuatoren zum Einsatz kommen. Auch eine Kombination aus einer Feder, welche für das Anheben der Motorhaube verantwortlich ist, mit einem Elektromotor ist gemäß einer bevorzugten Ausführungsform möglich. Dabei ist der Elektromotor für die Reversibilität zuständig. Kombinationen der verschiedenen Komponenten untereinander sind möglich und Gegenstand bevorzugter Ausführungsformen.

Dem Vorteil der Reversibilität der Aktuatoren steht der Nachteil gegenüber, daß diese Aktuatoren per se viel zu träge sind, um die Motorhaube innerhalb einiger weniger Millisekunden um ein genügendes Maß anzuheben. Typische Ansprechzeiten von elektrischen Motoren, die überhaupt zum Einsatz in dem erfindungsgemäßen System in Betracht kämen, liegen bei ca. 400 - 500 Millisekunden, denen typische Crashzeiten von ca. 100 Millisekunden gegenüberstehen. Hieraus wird beispielhaft deutlich, daß ohne spezielle Maßnahmen der Einsatz eines elektrischen Motors im Rahmen eines Motorhauben-Anhebesystems nicht ohne weiteres möglich wäre, da es in den meisten Fällen gar nicht mehr zum Ansprechen des elektrischen Motors käme, bevor der Aufprall vorbei ist.

Diesen Nachteil gleicht der Pre-Crashsensor aus, der über eine bevorstehende Kollision beispielsweise etwa 1/2 - 1 Sekunde vor dem ersten unabwendbaren Kontakt eine gesicherte Auskunft darüber gibt, daß es sogleich zum Aufprall kommen wird. Dieser Zeitvorteil gegenüber den klassischen Crashsensoren, die erst dann ansprechen, wenn die Deformation bereits eingesetzt hat, reicht aus, um beispielsweise einen elektrischen Motor gezielt anzusteuern, der als Aktuator im erfindungsgemäßen System dient. Der Zeitvorteil ist derart, daß die Schutzwirkung zumindest gleichwertig ist mit jener der bekannten Systeme, wenn nicht noch weit besser, da der Zeitvorteil von einer Sekunde Gelegenheit gibt, die Motorhaube vor dem eigentlichen Kontakt bereits in die erhöhte Position zu verfahren.

Sollte das System feststellen, daß eine Kollision entgegen der ersten Annahme ausgeblieben ist, so wird in einer Steuereinrichtung ein weiteres Signal generiert, und ein Aktuator senkt die Motorhaube wieder in die Ausgangsposition ab. Kommt es zu einer derartigen Fehlauslösung des Systems, entsteht dem Halter des Fahrzeugs kein finanzieller Aufwand, um das System wieder in einen betriebsbereiten Zusand zu bringen, wie dies bei dem bekannten System regelmäßig der Fall ist.

Wie bereits erwähnt, können oben genannte Aktuatoren untereinander kombiniert werden. Besonders vorteilhaft ist die Kombination einer Feder mit einem Elektomotor. Die Feder sorgt für ein schnelles Aufschwenken der Motorhaube nach Auslösung durch das entsprechende Signal vom Pre-Crashsensor, wohingegen der Elektromotor die Motorhaube im Falle der ausbleibenden Kollision wieder in die Ausgangsposition zurückschwenkt.

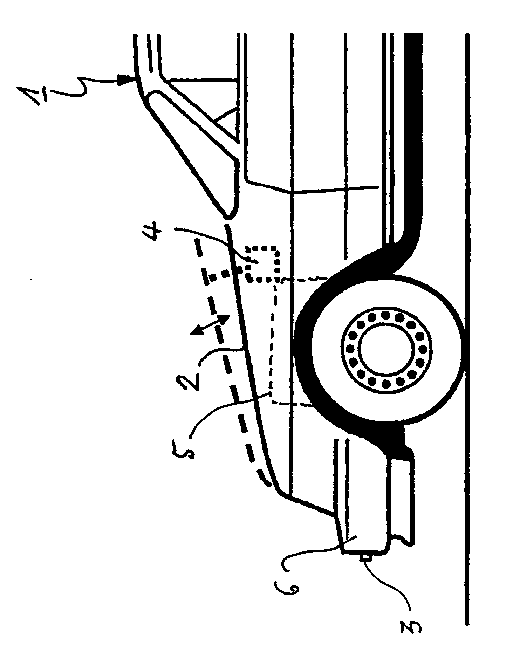

Die Erfindung wird nachfolgend anhand eines Einführungsbeispiels gemäß der einzigen Zeichnungsfigur näher erläutert.

Die Zeichnungsfigur zeigt schematisch den Vorderabschnitt eines Kraftfahrzeugs von der Fahrerseite her. Das Fahrzeug fährt gewöhnlich mit geschlossener Motorhaube 2. Diese deckt den Motorraum ab, in dem u.a. ein Motorblock 5 angeordnet ist.

Zur Erhöhung des Abstandes zwischen der Motorhaube 2 und dem Motorblock 5 weist das System nun wenigstens einen Aktuator 4 auf, der hier nur schematisch angedeutet ist, der aber als pneumatischer Antrieb, als hydraulischer Antrieb, als elektromotorischer Antrieb, als Kombination dieser untereinander oder als Feder-/Motorkombination ausgeführt sein kann.

Der Aktuator 4 hebt die Motorhaube 2 an, wenn der hier am vorderen Stoßfänger 6 angebrachte Pre-Crashsensor 3, eine unmittelbar bevorstehende Kollision detektiert und ein entsprechendes Signal generiert, welches über eine elektronische Steuereinrichtung (nicht dargestellt) dem Aktuator 4 zugeführt wird.

Die Stellung, welche die Motorhaube 2 in angehobener Position (hier skizziert dargestellt) einnimmt, bietet einen zusätzlichen Abstand zwischen Motorhaube 2 und Motorblock 5, so daß ein Durchschlagen des Kopfes des Fußgängers oder Radfahrers hin bis zum Motorblock 5 unwahrscheinlicher wird.

### Bezugszeichenliste

- 1: Fahrzeug
- 2: Motorhaube
- 3: Pre-Crashsensor
- 4: Aktuator
- 5: Motorblock
- 6: Stoßfänger

## Patentansprüche

1. System zum Anheben und Absenken einer Motorhaube (2) eines Kraftfahrzeuges (1), aufweisend
- wenigstens einen Crashsensor (3), mittels dessen eine Kollision des Fahrzeuges (1) mit einem Hindernis sensierbar und ein entsprechendes Signal generierbar ist, und
- wenigstens einen Aktuator (4), der die Motorhaube (2) auf Ansteuerung durch das eine Kollision anzeigende Signal vom Crashsensor (3) in eine angehobene Position verfährt, derart, daß der Abstand zwischen der Motorhaube (2) und dem Motorblock (5) des Fahrzeugs (1) um einen vorgebbaren Sicherheitsabstand erhöht wird,
- einem Crashsensor (3) der ein Pre-Crashsensor ist, der die Kollision bereits als eine unmittelbar bevorstehende Kollision des Fahrzeuges sensiert,
**dadurch gekennzeichnet, daß** der Aktuator (4) auf ein Ausbleiben einer Kollision auf Ansteuerung durch ein weiteres Signal die Motorhaube (2) wieder in die Ausgangsposition absenkt.

2. System nach Anspruch 1, bei dem der wenigstens eine Aktuator (4) ein Elektromotor ist.

3. System nach Anspruch 1, bei dem der wenigstens eine Aktuator (4) ein hydraulischer Antrieb ist.

4. System nach Anspruch 1, bei dem der wenigstens eine Aktuator (4) ein pneumatischer Antrieb ist.

5. System nach Anspruch 1, bei dem der wenigstens eine Aktuator (4) aus einer Kombination einer Feder mit einem Elektromotor besteht.

6. System nach Anspruch 1, bei dem der wenigstens eine Aktuator (4) aus einer Kombination eines hydraulischen Antriebs mit einem Elektromotor besteht.

7. System nach Anspruch 1, bei dem der wenigstens eine Aktuator (4) aus einer Kombination eines pneumatischen Antriebs mit einem Elektromotor besteht.

8. System nach Anspruch 1, bei dem der wenigstens eine Aktuator (4) aus einer Kombination eines hydraulischen Antriebs mit einem pneumatischen Antrieb besteht.

## Claims

1. A system for raising and lowering a bonnet (2) of a motor vehicle (1), having
- at least one crash sensor (3) by means of which a collision of the vehicle (1) with an obstacle can be sensed and a corresponding signal can be generated, and
- at least one actuator (4) which, when actuated by the crash sensor (3) by means of the signal indicating a collision, moves the bonnet (2) into a raised position in such a way that the distance between the bonnet (2) and the engine block (5) of the vehicle (1) is increased by a predefinable safety distance,
- a crash sensor (3), which is a pre-crash sensor, which already senses the collision as a directly imminent collision of the vehicle,
**characterized in that** in response to a failure of a collision to occur the actuator (4) lowers the bonnet (2) back into the normal position when actuated by a further signal.

2. System according to Claim 1, in which the at least one actuator (4) is an electromotor.

3. System according to Claim 1, in which the at least one actuator (4) is a hydraulic drive.

4. System according to Claim 1, in which the at least one actuator (4) is a pneumatic drive.

5. System according to Claim 1, in which the at least one actuator (4) is composed of a combination of a spring with an electric motor.

6. System according to Claim 1, in which the at least one actuator (4) is composed of a combination of a hydraulic drive with an electric motor.

7. System according to Claim 1, in which the at least one actuator (4) is composed of a combination of a pneumatic drive with an electric motor.

8. System according to Claim 1, in which the at least one actuator (4) is composed of a combination of a hydraulic drive with a pneumatic drive.

## Revendications

1. Système pour faire monter et descendre un capot moteur (2) d'un véhicule automobile (1), présentant
- au moins un capteur de collision (3) au moyen duquel peut être détectée une collision du véhicule (1) avec un obstacle et peut être généré un signal correspondant, et
- au moins un actionneur (4) qui, sur commande d'un signal du capteur de collision (3) indiquant une collision, amène le capot moteur (2) dans une position relevée de telle sorte que la distance entre le capot moteur (2) et le bloc moteur (5) du véhicule (1) est augmentée d'un écart de sécurité pouvant être prédéfini,
- un capteur de collision (3) qui est un capteur de pré-collision qui détecte déjà la collision sous la forme d'une collision imminente du véhicule,
**caractérisé en ce que** l'actionneur (4), sur commande d'un autre signal, redescend de nouveau le capot moteur (2) dans sa position initiale si aucune collision n'a lieu.

2. Système selon la revendication 1, avec lequel l'au moins un actionneur (4) est un moteur électrique.

3. Système selon la revendication 1, avec lequel l'au moins un actionneur (4) est un mécanisme d'entraînement hydraulique.

4. Système selon la revendication 1, avec lequel l'au moins un actionneur (4) est un mécanisme d'entraînement pneumatique.

5. Système selon la revendication 1, avec lequel l'au moins un actionneur (4) est constitué d'une combinaison d'un ressort et d'un moteur électrique.

6. Système selon la revendication 1, avec lequel l'au moins un actionneur (4) est constitué d'une combinaison d'un mécanisme d'entraînement hydraulique et d'un moteur électrique.

7. Système selon la revendication 1, avec lequel l'au moins un actionneur (4) est constitué d'une combinaison d'un mécanisme d'entraînement pneumatique et d'un moteur électrique.

8. Système selon la revendication 1, avec lequel l'au moins un actionneur (4) est constitué d'une combinaison d'un mécanisme d'entraînement hydraulique et d'un mécanisme d'entraînement pneumatique.
